# EUROPÄISCHE PATENTSCHRIFT

(11) **EP 1 517 810 B1**
(45) Veröffentlichungstag und Bekanntmachung des Hinweises auf die Patenterteilung: **24.08.2011**
(21) Anmeldenummer: 03735651.6
(22) Anmeldetag: 20.06.2003
(51) Int. Cl.: B60N 2/28

(54) **BEFESTIGUNGSRAHMEN SOWIE RÜCKHALTEVORRICHTUNG MIT BEFESTIGUNGSRAHMEN**
FASTENING FRAME AND RESTRAINT DEVICE HAVING A FASTENING FRAME
BÂTI DE FIXATION ET DISPOSITIF DE RETENUE AVEC BÂTI DE FIXATION

(30) Priorität: 01.07.2002 AT 9812002
(43) Veröffentlichungstag der Anmeldung: 30.03.2005
(73) Patentinhaber: FAIR - S.R.L., 42040 Sorbolo Levante de Brescello (IT)
(72) Erfinder: ROMOLO, Gazza, I-43058 Sorbolo (IT)
(74) Vertreter: Puchberger, Peter
(86) Internationale Anmeldenummer: PCT/EP2003/006503
(87) Internationale Veröffentlichungsnummer: WO 2004/002773

(56) Entgegenhaltungen:
- EP-A- 0 164 909
- EP-A- 0 485 121
- EP-A- 0 822 115
- EP-A- 0 967 113
- EP-A- 1 197 378
- FR-A- 2 741 847

## Beschreibung

Die Erfindung betrifft einen Befestigungsrahmen zur Befestigung eines Kindersitzes in Kraftfahrzeugen gemäß Oberbegriff des Patentanspruch 1, sowie eine Kinderrückhaltevorrichtung mit einem Kindersitz für Kraftfahrzeuge gemäß Oberbegriff des Patentanspruch 5.

Bei den derzeit am häufigsten zum Einsatz kommenden Kinderrockhaltevorrichtungen wird dieselbe auf einen rückwärtigen Sitz oder aber auch auf den vorderen Beifahrersitz, wenn kein Airbag vorhanden ist oder derselbe abschaltbar ist, gesetzt und mit dem im Fahrzeug vorhandenen Sicherheitsgurt, der auf die Körpergröße von Erwachsenen abgestellt ist, auf dem zugeordneten Fahrzeugsitz befestigt. Diese Art der Befestigung hat sich als unzufriedenstellend herausgestellt, vor allem deswegen, weil die vom Hersteller angegebene Gurtführung, die die bestmögliche Sicherung der Kinderrückhaltevorrichtung darstellt, nicht eingehalten wird. Aber selbst bei korrekte Gurtführung hinkt im Falle eines Unfalls die Verzögerung der Fahrzeugkarosserie nach, da zunächst die Gurtlose zwischen der Kinderrückhaltevorrichtung und dem Fahrzeug überwunden werden muss.

Solche mit den Sicherheitsgurten der Kraftfahrzeuge befestigten Kindersitze oder Kindersitzbefestigungsvorrichtungen sind den Druckschriften EP 0 822 115 B1, EP 0 485 121 B1, EP 0 967 113 A2, EP 0 164 909 und FR 2 741 847 zu entnehmen, die alle die beschriebenen Nachteile aufweisen: Bei allen diesen Vorrichtungen fehlen überdies die für die nachstehend beschriebene ISO-Fix-Verankerung benötigten Bauteile.

Mit der iSO-Norm 13216-1 hat sich in letzter Zeit ein Fixierungssystem für Kinderschutzsysteme entwickelt. Bei solchen sog. ISO-Fix Vorrichtungen ist es erforderlich, dass im Fahrzeug Kindersitzverankerungselemente, die fest mit der Fahrzeugkarosserie oder dem Fahrzeugsitz verbunden sind, vorgesehen sind. In diese Kindersitzverankerungselemente, die z.B. als Einrastbügel ausgebildet sein können, greifen Verankerungselemente, die z.B. als Schnappverschlüsse ausgebildet sein können, ein. Diese Verankerungselemente sind fest mit dem Rahmen des Kindersitzes verbunden. Durch diese starre Verbindung des Kindersitzes mit der Fahrzeugkarosserie wird die Verzögerung des Fahrzeuges sofort auf den Kindersitz und damit auf das Kind übertragen, wodurch die Vertetrungsgefahr des Kindes vermindert wird.

Nachteilig bei den bisher nach der ISO-Fix Norm befestigten Kinderrückhaltevorrichtungen ist, dass die Kinderrückhaltevorrichtungen mit ihren Verankerungselementen an den mit dem Fahrzeug festen Kindersitzverankerungselementen entlang einer einzigen Achse angelenkt sind, so dass eine Rotation um diese fahrzeugfeste Achse möglich ist und daher im Falle eines Unfalles hohe Rotationsbeschleunigungen auf das in der Kinderrückhaltevorrichtung sitzende Kind auftreten können.

Ein weiterer Nachteil ist es, auf Grund der unterschiedlichen Ausgestaltung der verschiedenen Fahrzeugtypen, dass die Geometrie der Kinderrückhaltevorrichtungen an den Fahrzeugtyp angepasst werden müssen und daher viele verschiedene Typen von Kinderrückhaltevorrichtungen eine kostengünstige Massenherstellung und Lagerhaltung bei den Endverkäufem verhindern.

Der gattungsbildende Stand der Technik ist durch die EP 1 197 378 A1 geoffenbart. Diese Kindersitzbefestigungsvorrichtung ist mit den an ihrem hinteren Ende angebrachten Vorrichtungsverankerungselementen an den dem Fahrzeugsitz zugeordneten, fahrzeugeigenen Kindersitzverankerungselementen lösbar verankert. Sie besitzt einen die Sitzfläche des Fahrzeugsitzes übergreifenden, als Befestigungsabschnitt für den Kindersitz ausgebildeten Befestigungsrahmen und eine an der Vorderseite des Fahrzeugsitzes bis zum Fahrzeugboden reichende, vordere Abstützung. Der Befestigungsrahmen umfasst eine Hilfsvorrichtung, deren Hauptabschnitt als Bodenplatte des Kindersitzes ausgebildet ist.

Aufgabe der vorliegenden Erfindung ist es, die o.g. Nachteile zu beseitigen und eine Vorrichtung zu schaffen, die eine weitere Erhöhung der Sicherheit beim Transport von Kindern in Kraftfahrzeugen erlaubt und universeller in Bezug auf die vielen vor handenen Fahrzeugtypen einsetzbar ist. Ferner soll sichergestellt werden, dass die Verankerungselemente mit den fahrzeugfesten Kindersitzverankerungselementen ordnungsgemäß verankert sind.

Die erfindungsgemäße Aufgabe wird durch die Merkmale der Patentansprüche gelöst. Vorzugsweise schließt der Abstützabschnitt mit der Vertikalen einen Winkel von 10° bis 15° ein. Zusätzlich zur Befestigung nach der ISO-Norm, welche die Verzögerung der Fahrzeugkarosserie unmittelbar auf den Kindersitz überträgt, ist damit eine Abstützung gegen den Fahrzeugboden oder gegen Karosserieteile, die eine Rotation des Kindersitzes, um die Verankerungsachse verhindert, gegeben, so dass die nachteiligen erhöhten Rotationsbeschleunigungen im Falle eines Unfalles nicht auftreten. Die Orientierung des Abstützbügels nach schräg vorne verhindert ein Abknicken des Befestigungsrahmens im Falle eines Unfalls.

Zur raschen Verbindung des Befestigungsrahmens mit einem Kindersitz weist der Befestigungsabschnitt Verriegelungselemente zur Aufnahme von am Kindersitz vorgesehenen Sperrelementen auf.

Bei einem Befestigungsrahmen für Kindersitze, die gegen die Fahrtrichtung montiert werden, weist der Befestigungsabschnitt einen im montierten Zustand im wesentlichen horizontalen Befestigungsschenkel und einen nach hinten unten geneigten Verankerungsabschnitt auf, die vorzugsweise über ein Stützblech verstrebt sind, wobei der Befestigungsschenkel über ein fixierbares Gelenk zur Abstützung gegen die Rückenlehne des Fahrzeugsitzes mit einem vorzugsweise nach oben abgewinkelten, hinteren Abstützbügel verbunden ist. Dadurch kann sichergestellt werden, dass die Auflagefläche des Kindersitzes am Befestigungsrahmen möglichst immer gleich, nämlich horizontal ist, was von Bedeutung ist, da unterschiedliche Positionen ein unterschiedliches dynamisches Verhalten im Falle eines Unfalles zeigen. Der hintere Abstützbügel verhindert, dass die Kinderrückhaltevorrichtung am Ende des Aufpralls bei einem Unfall eine Rotationsbewegung nach hinten ausführt und damit das im Kindersitz sitzende Kleinstkind, das gegen die Fahrtrichtung sitzt, in Bezug auf seine Sitzrichtung nach vorne geschleudert wird.

Gemäss Erfindung sind die Verankerungselemente durch Zugstangen aus der Verankerung mit den fahrzeugfesten Kindersitzverankerungselementen lösbar, die durch eine Querstange miteinander verbunden sind, an der ein Zuggriff angreift.

Vorzugsweise weist der Zuggriff eine Zustandsanzeige auf, die den gelösten oder den verrasteten Zustand der Verankerungselemente wiedergibt, indem sie die Position des Zuggriffes gegenüber dem Befestigungsrahmen wiedergibt, sodass optisch überprüft werden kann ob ein Verrasten stattgefunden hat.

Die Zugstangen können in den Längsholmen und die Querstange in einem hinteren Querträger des Befestigungsabschnittes des Befestigungsrahmens verlaufen, wobei der Zugriff aus dem Querträger ragt.

Bei der eingangs genannten Kinderrückhaltevorrichtung ist erfindungsgemäss der Kindernsitz an einem die Sitzfläche eines Fahrzeugsitzes übergreifenden Befestigungsrahmen wie er zuvor beschrieben wurde lösbar verankert.

Vorzugsweise ist im Kindersitz eine am Befestigungsrahmen lösbar verankernde Verankerungsvorrichtung eingebaut, die jeweils mindestens ein aus einer Freigabestellung in eine Sperrstellung bewegbares Sperrelement besitzt, das in der Freigabestellung in, am Befestigungsrahmen angebrachte, starre Verriegelungselemente einsetzbar ist und zum starren Verriegeln des Kindersitzes mit den Befestigungsrahmen in den starren Verriegelungselementen des Befestigungsrahmens in die Sperrstellung bewegbar ist. Der Kindersitz läßt sich somit leicht vom Befestigungsrahmen lösen und ebenso auf denselben wieder aufsetzen und mit diesem wieder fest verriegeln. Dabei können die Sperrelemente am Kindersitz sowie die Verriegelungselemente am Befestigungsrahmen entsprechend einer Norm ausgeführt werden, so dass ein und derselbe Kindersitz mit verschiedensten, an den jeweiligen Fahrzeugtyp angepassten Befestigungsrahmen verriegelt werden kann. Dadurch besteht nur mehr die Notwendigkeit, einen dem Fahrzeugtyp entsprechenden Befestigungsrahmen zu versenden, auf den jeder beliebige der so genormten Kindersitze aufgesetzt werden kann. Damit müssten z. B. beim Austausch des Kindersitzes gegen einen Kindersitz der nächst höheren Gewichtsklasse der Befestigungsrahmen nicht ausgetauscht werden, da auch der Kindersitz der nächst höheren Gewichtsklasse in die genormten Verriegelungselemente des Befestigungsrahmens passen. Auch die Lagerhaltung beim Endverkäufer für Kindersitze würde sich wesentlich vereinfachen, da die Kindersitze nicht mehr fahrzeugspezifisch wären.

Gemäß einem besonderen Auführungsbeispiel besitzt die Verankerungsvorrichtung im Bereich nahe der Kindersitzrückwand eine zu dieser parallele, im montierten Zustand horizontale Sperrwelle, die zumindest an ihren beiden seitlichen Endabschnitten und vorzugsweise über die gesamte Länge mit zu ihrer Längsachse parallelen, diametralen Abflachungen versehen ist, wobei die Sperrwelle um ihre Längsachse aus einer. Freigabestellung, mit im wesentlichen vertikal angeordneten Abflachungen in eine Sperrstellung mit im wesentlichen horizontal angeordneten Abflachungen verdrehbar ist, und das an den seitlichen Längsabschnitten des Befestigungsrahmens zwei starre, seitliche Verriegelungselemente angebracht sind, die einander gegenüberliegen und jeweils einen für einen Endabschnitt der Sperrwelle vorgesehenen vertikalen Einführungsschlitz besitzen, der unten in einem hinterschnittenen, zylindrisch ausgebildeten Abschluss endet, in dem der Endabschnitt der Sperrwelle aus seiner Freigabestellung in seine Sperrstellung verdrehbar ist. Die Abflachung über die gesamte Länge der Sperrwelle ist in der Herstellung einfacher.

Vorzugsweise besitzen die seitlichen Verriegelungselemente des Befestigungsrahmens keilförmige, sich nach unten verjüngende Einführungsschlitze und die Sperrwelle Steuerzapfen, die die Sperrwelle beim Aufsetzen des Kindersitzes auf dem Befestigungsrahmen durch das Auflaufen der Steuerzapfen der Sperrwelle auf die Oberfläche der Einfiihrungsschlitze der Verriegelungselemente des Befestigungsrahmens in ihre Freigabestellung verdrehen, d. h. automatisch in die entriegelte Stellung bringen.

Vorteilhafterweise hat die Verankerungsvorrichtung im Bereich nahe der Kindersitzvorderkante einen mittig angeordneten in Fahrzeuglängsrichtung verschiebbaren Sperrstift, dem ein vorderes starres Verriegelungselement zugeordnet ist, das an einem Querträger des Befestigungsrahmens angebracht ist und ein in Fahrzeuglängsrichtung verlaufendes Loch besitzt, in das der Sperrstift zum starren Verriegeln des Kindersitzes mit dem Befestigungsrahmen in Längsrichtung einführbar ist. Dieser in das Loch eingreifende Sperrstift ist ebenso wie die zuvor beschriebene Sperrwelle, die in die Verriegelungselemente eingesetzt wird, eine einfache, jedoch sehr wirkungsvolle Verrieglung. Ist sowohl die Sperrwelle als auch der Sperrstift vorgesehen, so ergibt sich eine Drei-Punkt-Befestigung, die eine sichere Verbindung von Befestigungsrahmen und Kindersitz darstellt.

Vorzugsweise besitzt die Verankerungsvorrichtung eine Betätigungsvorrichtung für das bzw. die Sperrelemente mit der bei auf dem Befestigungsrahmen vollständig aufgesetzten Kindersitz alle Sperrelemente in ihre jeweilige Sperrstellung bewegbar sind. Über diese Betätigungsvorrichtung kann die Verriegelung einfach vorgenommen werden. Vorteilhafterweise sieht die Betätigungsvorrichtung einen, vorzugsweise zwei Drehgriffe vor, der bzw. die zum Verdrehen der Sperrwelle auf einen bzw. beide seitlichen Endabschnitte der Sperrwelle aufgesetzt ist bzw. sind, sowie einen im wesentlichen in Fahrzeuglängsrichtung verlaufenden starren Gelenksarm, der die Sperrwelle mit dem Sperrstift beweglich koppelt und die Drehbewegung der Sperrwelle in eine Schiebebewegung des Sperrstiftes umwandelt. Damit kann mit der Betätigung der Drehgriffe die gleichzeitige Ver- oder Entriegelung der Sperrwelle und des Sperrstiftes erfolgen, wodurch eine einfache Montage und Demontage des Kindersitzes am Befestigungsrahmen gewährleistet ist. Rastet der Sperrstift nicht ordnungsgemäss ein, bleibt der starre Gelenksarm und damit die Drehgriffe in offener Stellung und am Drehgriff lässt sich dieser Zustand einer nicht ordnungsgemässen Verriegelung ablesen.

Vorteilhafterweise weist die Betätigungsvorrichtung, ein die Sperrelemente selbsttätig in die Sperrstellungen vorspannendes, z. B. als Gewichte oder Feder ausgebildetes Vorspannorgan auf , durch das die durch den Aufsetzvorgang des Kindersitzes in ihre Freigabestellung bewegten Sperrelemente bei vollständig auf den Befestigungsrahmen aufgesetztem Kindersitz wieder in ihre Sperrstellung zurückbewegt werden, wodurch eine automatische Verriegelung nach Aufsetzen des Kindersitzes erfolgt.

Um die Erfindung zu verdeutlichen, soll die erfindungsgemäße Kinderrückhaltevorrichtung und der erfindungsgemäße Befestigungsrahmen anhand der beiliegenden Zeichnungen nochmals erläutert werden.

Dabei zeigen die Fig. 1 - 4 den Montagevorgang des Befestigungsrahmens an den mit dem Fahrzeug festen Kindersitzverankerungen, sowie die Verankerung des Kindersitzes am Befestigungsrahmen. Die Fig. 5, 5a, 6, 6a, 7, 7a zeigen eine Ausführungsform des Verriegelungsmechanismus zwischen Kindersitz und Befestigungsrahmen. Die Fig. 8 zeigt den Befestigungsrahmen mit dem Entriegelungssystem für die Verankerungselemente. Fig. 9 zeigt einen Querschnitt im Bereich des hinteren Querträgers des Befestigungsrahmens. Fig. 10 zeigt einen Querschnitt des auf dem Befestigungsrahmen aufgesetzten Kindersitzes bei verrasteten Verankerungselementen. Fig. 11 zeigt , daß der Kindersitz bei gelösten Verankerungselementen nicht vollständig aufgesetzt werden kann. Die Fig. 12 zeigt eine schematisierte Darstellung eines Befestigungsrahmens auf dem ein Kindersitz in Fahrtrichtung befestigt werden kann. Die Fig. 13 zeigt einen Befestigungsrahmen auf dem ein Kindersitz entgegen der Fahrtrichtung montiert werden kann.

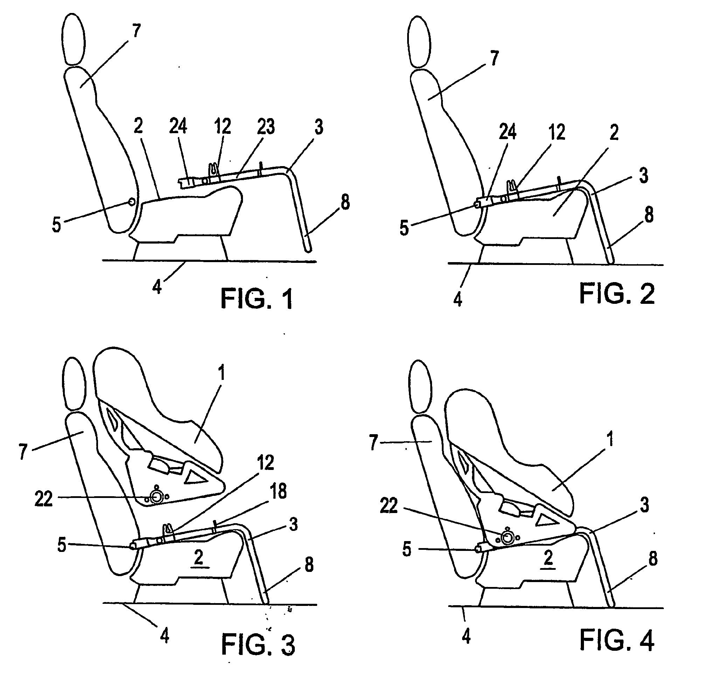

Fig. 1 zeigt einen am Fahrzeugboden 4 montierten Fahrzeugsitz mit einer Rückenlehne 7 und einer Sitzfläche 2 und am Fahrzeug fest montierte Kindersitzverankerungselemente 5. Der Befestigungsrahmen 3 weist einen Befestigungsabschnitt 23 und einen Abstützabschnitt in Form eines Abstützbügels 8 auf. Der Befestigungsabschnitt 23 des Befestigungsbügels 3 trägt die Verriegelungselemente 12 und an seinem hinteren Ende Verankerungselemente 24.

In Fig. 2 stehen die Verankerungselemente 24 in Eingriff mit den fahrzeugfesten Kindersitzverankerungselementen 5. Der Abstützbügel 8 liegt am Fahrzeugboden 4 auf.

In Fig. 3 sieht man wie der Kindersitz 1 von oben auf den Befestigungsrahmen 3 aufgesetzt wird. Beim Aufsetzen rastet eine Sperrwelle, die an ihren Enden Drehknöpfe 22 aufweist in den Verriegelungselementen 12 ein und ein Sperrstift, der an der vorderen Seite der unteren Fläche des Kindersitzes 1 angeordnet ist, rastet im vorderen Verriegelungselement 18 ein.

Fig. 4 schließlich zeigt den Kindersitz im montierten Zustand am Befestigungsrahmen 3. Der Kindersitz 1 ist an seiner Unterseite so ausgebildet, daß er den Befestigungsrahmen 3aufnimmt.

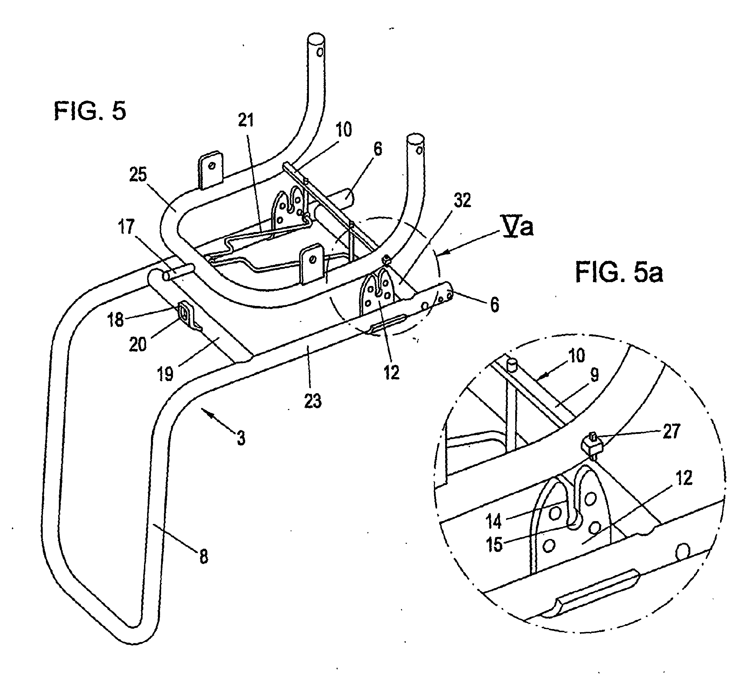

Die Fig. 5, 6 und 7 zeigen eine mögliche Ausführungsform des Verriegelungsmechanismus zwischen Befestigungsrahmen 3 und dem Rahmen 25 des Kindersitzes. Das im Befestigungsrahmen 3 vorgesehene Entriegelungssystem für die Verankerungselemente ist aus Gründen der Übersichtlichkeit in diesen Figuren nicht dargestellt.

In die Fig. 5a, 6a und 7a ist jeweils das Detail gemäß Pfeil Va, VIa und VIIa vergrößert dargestellt. Der Befestigungsrahmen 3 weist einen Befestigungsabschnitt 23 und einen Abstützabschnitt in Form eines Abstützbügels 8 auf. Im vorderen Bereich des Befestigungsabschnittes 23 befindet sich ein vorderer Querträger 19, der in seiner Mitte ein vorderes Verriegelungselement 18 trägt, in dem ein Loch 20 vorgesehen ist. Im hinteren Bereich des Befestigungsabschnittes 23 ist der Befestigungsrahmen über einen hinteren Querträger 32 verstrebt. An den hinteren Enden 6 des Befestigungsrahmens 3 schließen sich die Verankerungselemente für die Verankerung mit den fahrzeugfesten Kindersitzverankerungselementen an, die in den Fig. 5, 6 und 7 nicht dargestellt sind. Knapp vor dem hinteren Querträger 32 sind seitlich hintere Verriegelungselemente 12 am Befestigungsrahmen 3 fixiert, die im Wesentlichen vertikale Einführungsschlitze 14 aufweisen, die sich nach unten hin verjüngen und an ihrem Ende mit einem hinterschnittenen, zylindrisch ausgebildeten Abschluss 15 ausgebildet sind. Der Rahmen 25 der fest mit dem Kindersitz verbunden ist, weist in seinem Bereich nahe der Kindersitz Rückenlehne eine Sperrwelle 10 auf, die zwei diametral angeordnete Abflachungen 9 aufweist. Die Spenwelle 10 ist über einen starren Gelenkarm 21 mit einem Sperrstift 17 verbunden, wodurch die Drehung der Sperrwelle 10 eine longitudinale Verschiebung des Sperrstiftes 17 bewirkt. In Sperrstellung sind die Abflachungen der Sperrwelle horizontal ausgerichtet und der Sperrstift steht aus dem Rahmen 25 nach vorne heraus. In Freigabestellung sind die Abflachungen 9 der Sperrwelle 10 vertikal ausgerichtet und der Sperrstift 17 ist zurückgezogen, so dass er den Rahmen 25 nach vorne nicht überragt. Es kann ein Vorspannorgan, nicht dargestellt, wie ein Gewicht oder eine Feder vorgesehen sein, die die Sperrwelle 10 und den Sperrstift 17 in Sperrstellung zurückstellen, so dass eine Freigabe nur durch Überwindung der Kraft des Vorspannorgans erfolgen kann.

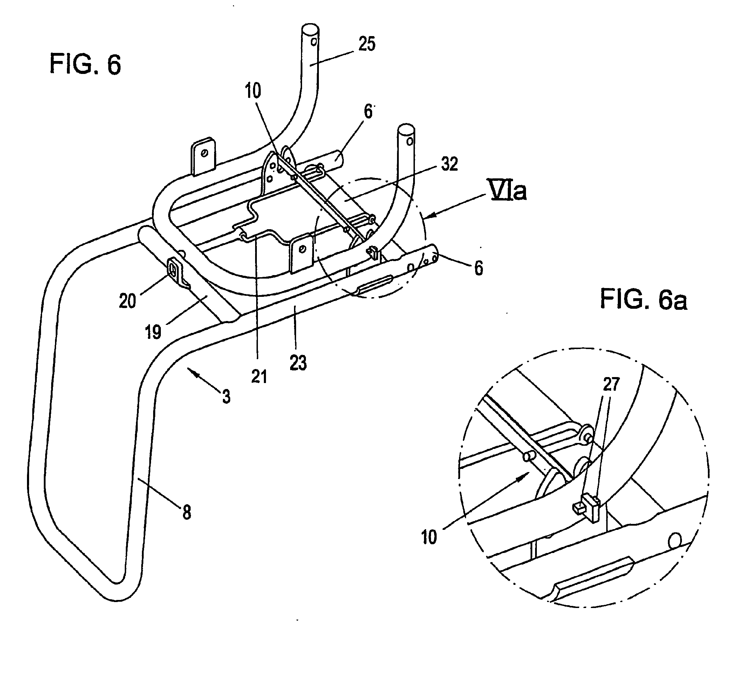

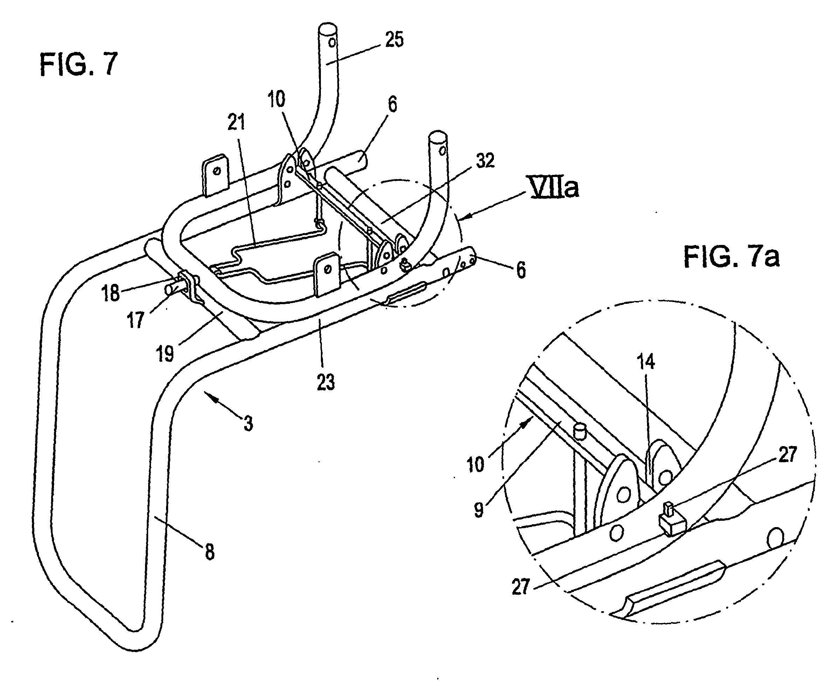

Vor dem Aufsetzen des Kindersitzes auf den Befestigungsrahmen 3 befinden sich die Sperrwelle 10 und der Sperrstift 17 in Sperrstellung, d. h. die Abflachungen 9 sind horizontal ausgerichtet und der Sperrstift 17 überragt den Rahmen 25 des Kindersitzes. Kommt nun beim Aufsetzen des Kindersitzes auf den Befestigungsrahmen 3 die Sperrwelle 10 über ihre Steuerzapfen 27 mit dem keilförmigen Einführschlitz 14 in Berührung, so dreht sich die Sperrwelle 10 in die Freigabeposition, da sie nur in dieser Position den Einführschlitz 14 durchsetzen kann (siehe Fig. 6 und 6a). Gleichzeitig mit der Drehung der Sperrwelle 10 wird der Sperrstift 17 zurückgezogen. Gelangt schließlich die Sperrwelle 10 in den Abschluss 15 des Einführschlitzes 14, welcher Abschnitt 15 durch die Hinterschneidung breiter ist als der Einführschlitz 14, so kann sich die Sperrwelle 10 vorzugsweise durch die Kraft des Vorspannorgans in die Sperrstellung zurückdrehen, so dass wie in Fig. 7 dargestellt, die Abflachungen 9 der Sperrwelle 10 horizontal ausgerichtet sind und der Sperrstift 17 wieder nach vor und durch das Loch 20 geschoben wird. Damit ist der Kindersitz 1 verriegelt und an drei Punkten, nämlich den beiden hinteren und dem vorderen Verriegelungselement am Befestigungsrahmen 3 fixiert.

Zur Lösung des Kindersitzes können z. B. an der Sperrwelle 10 beidseitig Drehknöpfe befestigt sein wie diese in den Fig. 3 und 4 mit 22 bezeichnet ist. Mit Hilfe des Drehknopfes 22 kann die Sperrwelle 10 in Freigabestellung gebracht werden und der Kindersitz von dem Befestigungsrahmen 3 abgehoben werden.

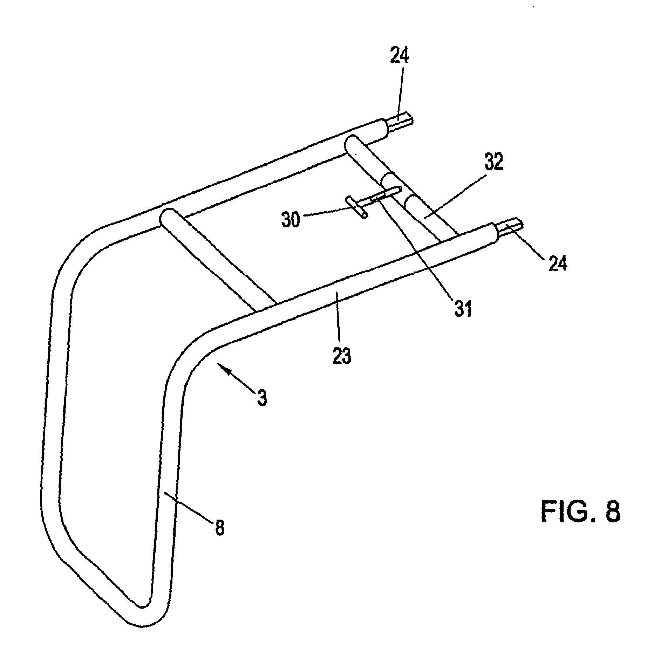

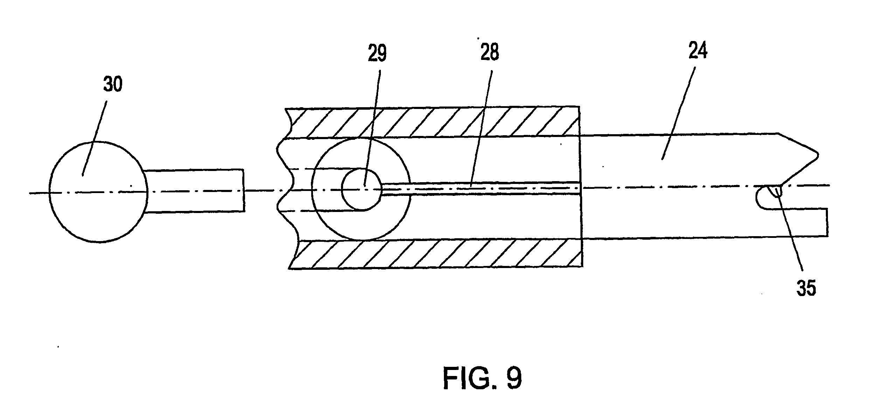

Die Fig. 8 zeigt den Befestigungsrahmen 3 mit einem erfindungsgemäßen Entriegelungssystem für die Verankerungselemente 24, wobei der in Fig. 9 gezeigte Querschnitt im Bereich des hinteren Querträgers 32 die Funktion des Entriegelungssystems verdeutlicht. Die Verriegelungselemente 24 enthalten jeweils einen Verriegelungshaken 35, der über eine Zugstange 28 aus seiner Verriegelungsposition gezogen werden kann. Die beiden Zugstangen 28 verlaufen in den Längsträgern des Befestigungsabschnittes 23 des Befestigungsrahmens 3 und sind durch eine Querstange 29, die in Querträger 32 verläuft, miteinander verbunden. An dieser Querstange 29 greift ein Zuggriff 30 an mit der die Zugstangen 28 und damit die Haken 35 betätigt werden können. Der Zuggriff 30 ist in seinem longitudinalen Abschnitt hülsenförmig ausgeführt und weist eine Zustandsanzeige 31 in Form eines Fensters auf, durch die eine mit dem Querträger 32 feste Anzeige sichtbar ist und somit die Position des Zuggriffes 30 gegenüber dem Befestigungsrahmen 3 wiedergeben kann. Vor dem Verankern der Verankerungselemente 24 mit den Kindersitzverankerungselementen 5 im Fahrzeug befinden sich die Verriegelungshaken 35 in angehobener Stellung und der Zuggriff 30 in seiner am weitesten herausgezogenen Position in Bezug auf den hinteren Querträger 32. In der Zustandsanzeige 31 wird angezeigt, daß der Befestigigungsrahmen 3 nicht verriegelt ist. Werden nun die Verankerungselemente 24 gegen die Kindersitzverankerungselemente 5 geschoben, so werden die Verriegelungshaken 35 nach unten gedrückt. Die Zugstangen 28 werden in Richtung Verankerungselemente 24 verschoben und der Zuggriff 30 wird über die Querstange 29 in seine dem hinteren Querträger 32 nächstliegende Position verschoben. In der Zustandsanzeige 31 wird die ordnungsgemässe Verankerung der Verankerungselemente 24 mit den Kindersitzverankerungselementen 5 im Fahrzeug angezeigt.

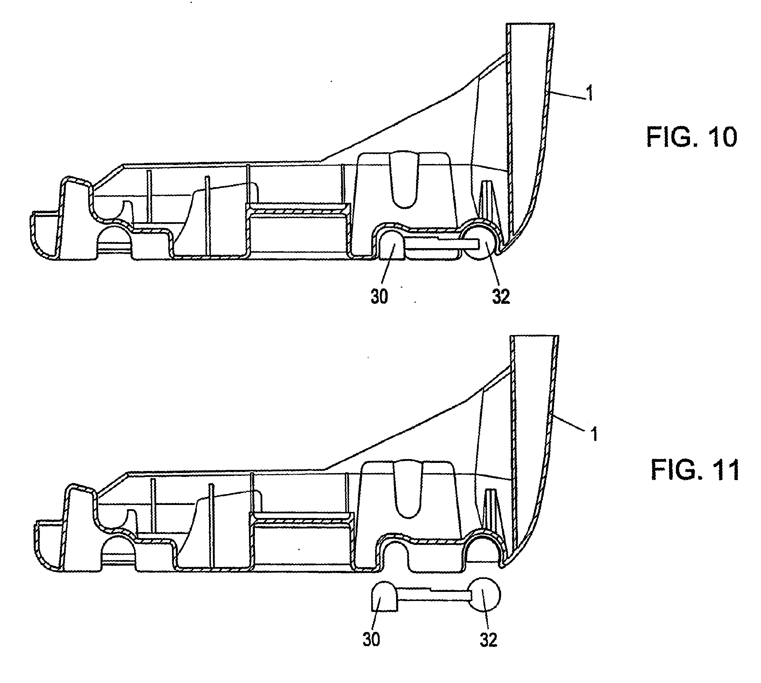

In den Fig. 10 und 11 ist ein Schnitt durch einen Kindersitz gezeigt, der im Falle der Fig. 10 auf dem Befestigigungsrahmen 3 ordnungsgemäss aufgesetzt ist und im Falle der Fig. 11 nicht auf dem Befestigigungsrahmen 3 aufgesetzt werden kann, da der Zuggriff 30 in seiner von dem hinteren Querträger 32 entfernten Position ist, da die Verankerungselemente24 nicht verankert sind. In dieser Position paßt die Kombination aus hinterem Querträger 32 und Zuggriff 30 nicht in die dafür vorgesehene Ausnehmung des Gehäuses des Kindersitzes 1.

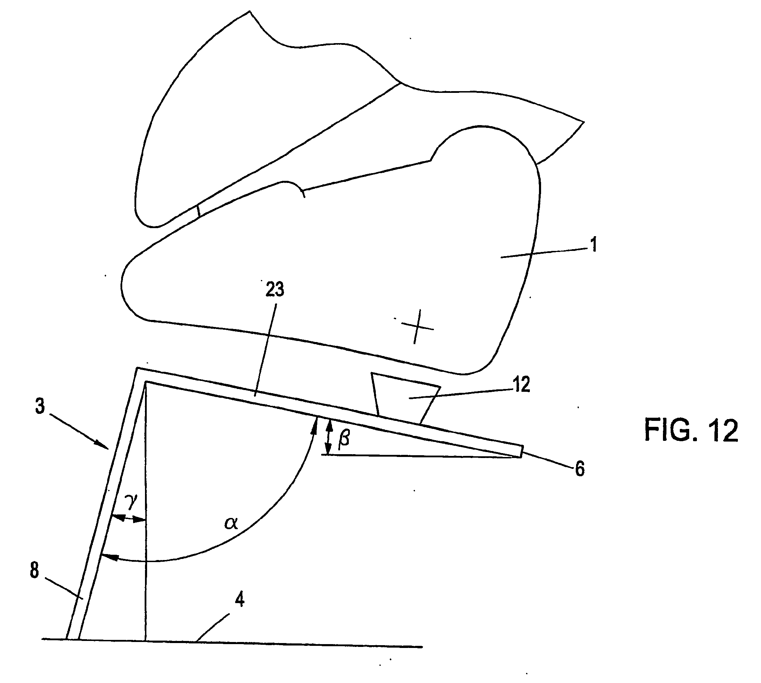

In Fig. 12 ist schematisch ein Befestigungsrahmen 3 dargestellt, auf dem, wie in den Fig. 1 bis 4, der Kindersitz in Fahrtrichtung montiert werden kann. Der Befestigungsabschnitt 23 wird mit seinem hinteren Ende 6 über Verankerungselemente mit den fahrzeugfesten Kindersitzverankerungselementen verbunden und stützt sich mit dem Abstützabschnitt 8 am Fahrzeugboden 4 ab. Der Winkel α zwischen dem Befestigungsabschnitt 23 und dem Abstützabschnitt 8 ist stumpf und beträgt im gezeigten Fall 95°. Der Abstützabschnitt fällt um den Winkel γ gegen die Vertikale ab; dieser beträgt im gezeigten Fall 15°. Der Winkel β zwischen dem Befestigungsabschnitt 23 und der Horizontalen beträgt ca. 10° und entspricht der üblichen Neigung der Sitzfläche von Fahrzeugsitzen, die gemäß Norm um 15° ± 10° gegen die Horizontale geneigt sein dürfen. Schematisch ist der Kindersitz 1 angedeutet.

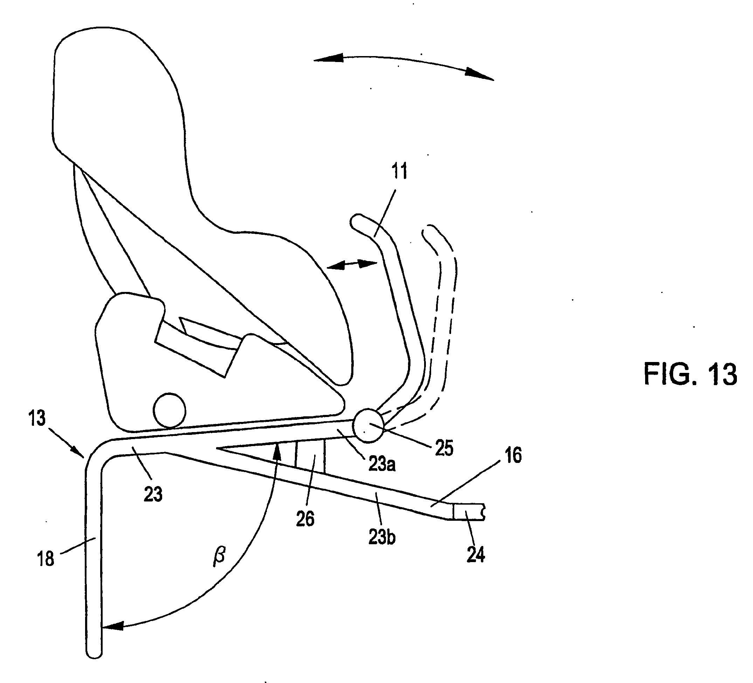

Fig. 13 schließlich zeigt einen Befestigungsrahmen 13, der zur Befestigung eines Kindersitzes 1 gegen die Fahrtrichtung bestimmt ist, wobei in diesem Fall der Befestigungsabschnitt 23 zwei Schenkel, einen horizontalen Befestigungsschenkel 23a, an dem der Kindersitz 1 befestigt wird und einen nach unten abfallenden Verankerungsschenkel 23b, der an seinem hinteren Ende 16 die Verankerungselemente 24 für die Verankerung mit den fahrzeugfesten Kindersitzverankerungselementen trägt. Der Befestigungsschenkel 23a schließt mit dem Abstützabschnitt 8 einen Winkel β von 95° ein. Der horizontale Befestigungsschenkel 23a endet dann unter der Nase des Kindersitzbodens und der Abstützbügel 11 wird dort über ein fixierbares Gelenk 25, das ihn schwenkbar macht angeschlagen. Dies ist notwendig, da die Rückenlehnen einen unterschiedlichen Torsowinkel haben und das Gestell möglichst fest verspannt werden muss, um die Rotation im rebound zu verhindern. Die Befestigung des Kindersitzes 1 erfolgt über das Verriegelungselement 12, das nahe der vorderen Kante der Sitzfläche des Fahrzeugsitzes am Befestigungsabschnitt 23 des Befestigungsrahmens 13 angeordnet ist. Um den bei einem Unfall auftretenden Kräften standzuhalten, sind der Befestigungsschenkel 23a und der Verankerungsschenkel 23b zusätzlich durch ein Stützblech 26 verstrebt.

## Patentansprüche

1. Befestigungsrahmen zur Befestigung eines Kindersitzes in Kraftfahrzeugen, die mit fahrzeugeigenen, jeweils einem Fahrzeugsitz zugeordneten Kindersitzverankerungselementen versehen sind, die mit der Fahrzeugkarosserie und/oder dem Fahrzeugsitz starr verbunden sind, wobei der Befestigungsrahmen (3, 13) einen Befestigungsabschnitt (23) aufweist, an dessen einem Ende Verankerungselemente (24) zum lösbaren Verankern des Befestigungsrahmens (3, 13) an den mit dem Fahrzeug festverbundenen Kindersitzverankerungselementen (5) und an dessen anderem Ende ein Abstützabschnitt (8) anschließt, der vor dem Fahrzeugsitz am Fahrzeugboden (4) oder an Karosserieteilen abgestützt ist und der im montierten Zustand des Befestigungsrahmens schräg nach vorne abfällt, und dass der Befestigungsabschnitt (23) Verriegelungselemente (12, 18) zur Aufnahme von am Kindersitz vorgesehen Sperrelementen (10, 17) aufweist, **dadurch gekennzeichnet, dass** die Verankerungselemente (24) durch Zugstangen (28) aus der Verankerung mit den fahrzeugfesten Kindersitzverankerungselementen (5) lösbar sind, die durch eine Querstange (29) miteinander verbunden sind, an der ein Zuggriff (30) angreift.

2. Befestigungsrahmen nach Anspruch 1, **dadurch gekennzeichnet, dass** der Zuggriff (30) eine Zustandsanzeige (31) aufweist, die den gelösten oder den verrasteten Zustand der Verankerungselemente (24) wiedergibt indem sie die Position des Zuggriffes (30) gegenüber dem Befestigungsrahmen anzeigt.

3. Befestigungsrahmen nach Anspruch 1 oder 2, **dadurch gekennzeichnet, dass** die Zugstangen (28) in den Längsholmen und die Querstange (29) in einem hinteren Querträger (32) des Befestigungsabschnittes (23) des Befestigungsrahmens verlaufen, wobei der Zuggriff (30) aus dem Querträger (32) ragt.

4. Befestigungsrahmen nach einem der Ansprüche 1 bis 3, **dadurch gekennzeichnet, dass** bei dem Befestigungsrahmen für Kindersitze, die gegen die Fahrtrichtung montiert werden, der Befestigungsabschnitt (23) einen im montierten Zustand im wesentlichen horizontalen Befestigungsschenkel (23a) und einen nach hinten unten geneigten Verankerungsabschnitt (23b) aufweist die, vorzugsweise über ein Stützblech (26), verstrebt sind, wobei der Befestigungsschenkel (23a) über ein fixierbares Gelenk (25) zur Abstützung gegen die Rückenlehne (7) des Fahrzeugsitzes mit einem vorzugsweise nach oben abgewinkelten, hinteren Abstützbügel (11) verbunden ist.

5. Kinderrückhaltevorrichtung mit einem Kindersitz für Kraftfahrzeuge, die mit fahrzeugeigenen, jeweils einem Fahrzeugsitz zugeordneten Kindersitzverankerungselementen versehen sind, die mit der Fahrzeugkarosserie und/oder dem Fahrzeugsitz starr verbunden sind, wobei der Kindersitz (1) an einem die Sitzfläche (2) eines Fahrzeugsitzes übergreifenden Befestigungsrahmen (3, 13) nach einem der Ansprüche 1 bis 4 lösbar verankert ist wobei im Kindersitz eine am Befestigungsrahmen (3, 13) lösbar verankernde Verankerungsvorrichtung eingebaut ist, die jeweils mindestens ein aus einer Freigabestellung in eine Sperrherstellung bewegbares Sperrelement (10, 17) besitzt, das in der Freigabestellung in die am Befestigungsrahmen (3, 13) angebrachten, starren Verriegelungselemente (12, 18) einsetzbar ist und zum starren Verriegeln des Kindersitzes mit dem Befestigungsrahmen (3, 13) in den starren Verriegelungselementen (12) des Befestigungsrahmens (3, 13) in die Sperrstellung bewegbar ist, **dadurch gekennzeichnet, dass** die Verankerungsvorrichtung im Bereich nahe der Kindersitzrückwand eine zu dieser parallele im montierten Zustand horizontale Sperrwelle (10) besitzt, die zumindest an ihren beiden seitlichen Endabschnitten und vorzugsweise über die gesamte Länge mit zu ihrer Längsachse parallelen diametralen Abflachungen (9) ver sehen ist, wobei die Sperrwelle (10) um ihre Längsachse aus einer Freigabestellung mit im wesentlichen vertikal angeordneten Abflachungen (9) in eine Sperrstellung mit im wesentlichen horizontal angeordneten Abflachungen (9) verdrehbar ist, und dass an den seitlichen Längsabschnitten des Befestigungsrahmens zwei starre, seitliche Verriegelungselemente (12) angebracht sind, die einander gegenüber liegen und jeweils einen für einen Endabschnitt der Sperrwelle (10) vorgesehenen, vertikalen Einführschlitz (14) besitzen, der unten in einem hinterschnittenen, zylindrisch ausgebildeten Abschluss (15) endet, in dem der Endabschnitt der Sperrwelle (10) aus seiner Freigabestellung in seine Sperrstellung verdrehbar ist.

6. Kinderrückhaltevorrichtung nach Anspruch 5, **dadurch gekennzeichnet, dass** die seitlichen Verriegelungselemente (12) des Befestigungsrahmens (3, 13) keilförmige, sich nach unten verjüngende Einführschlitze (14) und die Sperrwelle (10) Steuerzapfen (27) besitzen, die die Sperrwelle (10) beim Aufsetzen des Kindersitzes auf den Befestigungsrahmen durch das Auflaufen der Steuerzapfen (27) der Sperrwelle (10) auf die Oberfläche der Einführschlitze (14) der Verriegelungselemente (12) des Befestigungsrahmens (3, 13) in ihre Freigabestellung verdrehen.

7. Kinderrückhaltevorrichtung nach Anspruch 5 oder 6, **dadurch gekennzeichnet, dass** die Verankerungsvorrichtung im Bereich nahe der Kindersitzvorderkante einen mittig angeordneten, in fahrzeuglängsrichtung verschiebbaren Sperrstift (17) besitzt, dem ein vorderes, starres Verriegelungselement (18) zugeordnet ist, das an einem vorderen Querträger (19) des Befestigungsrahmens (3, 13) angebracht ist und ein in Fahrzeuglängsrichtung verlaufendes Loch (20) besitzt, in das der Sperrstift (17) zum starren Verriegeln des Kindersitzes (1) mit dem Befestigungsrahmen (3, 13) in Längsrichtung einführbar ist.

8. Kinderrückhaltevorrichtung nach einem der Ansprüche 5 bis 7, **dadurch gekennzeichnet, dass** die Verankerungsvorrichtung eine Betätigungsvorrichtung (22) für das bzw. die Sperrelemente (10, 17) besitzt, mit der, bei auf den Befestigungsrahmen (3, 13) vollständig aufgesetztem Kindersitz, alle Sperrelemente (10, 17) in ihre jeweilige Sperrstellung bewegbar sind.

9. Kinderrückhaltevorrichtung nach den Ansprüchen 5, 7 und 8 und ggf. zusätzlich auch Anspruch 6, **dadurch gekennzeichnet, dass** die Betätigungsvorrichtung einen, vorzugsweise zwei Drehgriffe (22) vorsieht, der bzw. die zum Verdrehen der Sperrwelle (10) auf einen, vorzugsweise beide seitliche Endabschnitte der Sperrwelle aufgesetzt ist, sowie einen im wesentlichen in Fahrzeuglängsrichtung verlaufenden starren Gelenkarm (21) vorsleht, der die Sperrwelle (10) mit dem Sperrstift (17) beweglich koppelt und die Drehbewegungen der Sperrwelle (10) in eine Schiebebewegung des Sperrstiftes (17) umwandelt.

10. Kinderrückhaltevorrichtung nach Anspruch 8 oder 9, **dadurch gekennzeichnet, dass** die Betätigungsvorrichtung ein die Sperrelemente (10, 17) selbsttätig in die Sperrstellungen vorspannendes, z.B. als Gewicht oder Feder ausgebildetes, Vorspannorgan aufweist, durch das die durch den Aufsetzvorgang des Kindersitzes (1) in ihre Freigabestellung bewegten Sperrelemente (10, 17) bei vollständig auf den Befestigungsrahmen (3, 13) aufgesetztem Kindersitz (1) wieder in ihre Sperrstellung zurückbewegt werden.

11. Kinderrückhaltevorrichtung nach einem der Ansprüche 6 bis 10 und einem der Ansprüche 2, bis 3, **dadurch gekennzeichnet, dass** das Gehäuse (33) des Kindersitzes auf ihrer dem Befestigungsrahmen zugewandten Seite Vertiefungen zur Aufnahme des Befestigungsrahmens und zur Aufnahme des Zuggriffes (30) im verrasteten Zustand der Verankerungselemente (24) aufweist.

## Claims

1. Securing frame for securing a child seat in motor vehicles which are provided with vehicle-specific child seat anchoring elements which are associated in each case with a vehicle seat and which are rigidly connected to the vehicle bodywork and/or the vehicle seat, the securing frame (3, 13) having a securing portion (23), one end of which is adjoined by anchoring elements (24) for releasably anchoring the securing frame (3, 13) to the child seat anchoring elements (5) which are securely connected to the vehicle and the other end of which is adjoined by a support portion (8) which is supported in front of the vehicle seat on the vehicle floor (4) or on bodywork components and which, when the securing frame is in the assembled state, is inclined forwards in a downward direction, and the securing portion (23) having locking elements (12, 18) for receiving locking elements (10, 17) provided on the child seat, **characterised in that** the anchoring elements (24) can be released from the anchoring with the child seat anchoring elements (5) secured to the vehicle by means of pulling rods (28) which are connected to each other by means of a cross bar (29) with which a pulling handle (30) engages.

2. Securing frame according to claim 1, **characterised in that** the pulling handle (30) has a status display (31) which indicates the released or the locked state of the anchoring elements (24) by indicating the position of the pulling handle (30) with respect to the securing frame.

3. Securing frame according to claim 1 or claim 2, **characterised in that** the pulling rods (28) extend in the longitudinal spars and the cross bar (29) extends in a rear transverse carrier (32) of the securing portion (23) of the securing frame, the pulling handle (30) protruding from the transverse carrier (32).

4. Securing frame according to any one of claims 1 to 3, **characterised in that**, in the securing frame for child seats, which are assembled counter to the travel direction, the securing portion (23) has a securing member (23a) which is substantially horizontal in the assembled state and an anchoring portion (23b) which is inclined backwards and downwards which are braced preferably via a support sheet (26), the securing member (23a) being connected by means of a fixable articulation (25) to a curved rear support member (11) which is preferably inclined in an upward direction for support against the backrest (7) of the vehicle seat.

5. Child restraining device having a child seat for motor vehicles which are provided with vehicle-specific child seat anchoring elements which are associated in each case with a vehicle seat and which are rigidly connected to the vehicle bodywork and/or the vehicle seat, the child seat (1) being releasably anchored to a securing frame (3, 13) according to any one of claims 1 to 4 which engages over the seating face (2) of a vehicle seat, there being incorporated in the child seat an anchoring device which releasably anchors to the securing frame (3, 13) and which has at least one locking element (10, 17) which can be moved from a release position into a locking position and which, in the release position, can be inserted into the rigid locking elements (12, 18) which are fitted to the securing frame (3, 13) and, in order to rigidly lock the child seat to the securing frame (3, 13) can be moved into the locking position in the rigid locking elements (12) of the securing frame (3, 13), **characterised in that** the anchoring device, in the region close to the child seat rear wall, has a horizontal locking shaft (10) which is parallel therewith in the assembled state and which is provided, at least at both lateral end portions thereof and preferably over the entire length, with diametral flat portions (9) which are parallel with the longitudinal axis thereof, the locking shaft (10) being able to be rotated about the longitudinal axis thereof from a release position with substantially vertically arranged flat portions (9) into a locking position with substantially horizontally arranged flat portions (9), and **in that** at the lateral longitudinal portions of the securing frame there are fitted two rigid lateral locking elements (12) which face each other and which each have a vertical insertion slot (14) which is provided for an end portion of the locking shaft (10) and which terminates at the bottom in an undercut cylindrical closure (15) in which the end portion of the locking shaft (10) can be rotated from the release position into the locking position thereof.

6. Child retention device according to claim 5, **characterised in that** the lateral locking elements (12) of the securing frame (3, 13) have wedge-like insertion slots (14) which taper downwards and the locking shaft (10) has control pins (27) which rotate the locking shaft (10) into the release position thereof when the child seat is placed on the securing frame by the control pins (27) of the locking shaft (10) running onto the surface of the insertion slots (14) of the locking elements (12) of the securing frame (3, 13).

7. Child retention device according to claim 5 or claim 6, **characterised in that** the anchoring device has, in the region close to the child seat front edge, a centrally arranged locking pin (17) which can be displaced in the longitudinal direction of the vehicle and with which there is associated a front rigid locking element (18) which is fitted to a front transverse carrier (19) of the securing frame (3, 13) and which has a hole (20) which extends in the longitudinal direction of the vehicle and into which the locking pin (17) for rigidly locking the child seat (1) to the securing frame (3, 13) can be introduced in the longitudinal direction.

8. Child retention device according to any one of claims 5 to 7, **characterised in that** the anchoring device has an actuation device (22) for the locking element(s) (10, 17), by means of which all the locking elements (10, 17) can be moved into their respective locking position when the child seat is completely placed on the securing frame (3, 13).

9. Child retention device according to claims 5, 7 and 8 and optionally also claim 6, **characterised in that** the actuation device provides one, preferably two rotating handles (22) which is/are positioned on one, preferably both lateral end portions of the locking shaft in order to rotate the locking shaft (10), and a rigid articulated arm (21) which extends substantially in the longitudinal direction of the vehicle and which movably couples the locking shaft (10) to the locking pin (17) and converts the rotational movements of the locking shaft (10) into a sliding movement of the locking pin (17).

10. Child retention device according to claim 8 or claim 9, **characterised in that** the actuation device has a pretensioning member which pretensions the locking elements (10, 17) automatically into the locking positions and which is constructed, for example, as a weight or a spring, and by means of which the locking elements (10, 17) which have been moved into the release position thereof by the positioning process of the child seat (1) are moved back into their locking position again when the child seat (1) is completely positioned on the securing frame (3, 13).

11. Child retention device according to any one of claims 6 to 10 and either claim 2 or claim 3, **characterised in that** the housing (33) of the child seat has, at the side thereof facing the securing frame, recesses for receiving the securing frame and for receiving the pulling handle (30) when the anchoring elements (24) are in the locked state.

## Revendications

1. Cadre de fixation pour la fixation d'un siège d'enfant dans des véhicules automobiles qui sont pourvus d'éléments d'arrimage de siège d'enfant, qui sont propres au véhicule qui sont associés respectivement à un siège du véhicule et qui sont reliés rigidement à la carrosserie du véhicule et/ou au siège du véhicule, le cadre (3, 13) de fixation ayant un tronçon (23) de fixation, à l'une des extrémités duquel se raccordent des éléments (24) d'arrimage pour l'arrimage amovible du cadre (3, 13) de fixation aux éléments (5) d'arrimage du siège d'enfant reliés de manière fixe au véhicule et à l'autre extrémité duquel se raccorde un tronçon (8) d'appui qui s'appuie devant le siège du véhicule sur le plancher (4) du véhicule ou sur des parties de la carrosserie et qui, lorsque le cadre de fixation est à l'état monté, est incliné vers l'avant et en ce que le tronçon (23) de fixation comporte des éléments (12, 18) de verrouillage pour la réception d'éléments (10, 17) de blocage prévus sur le siège d'enfant, **caractérisé en ce que** les éléments (24) d'arrimage peuvent, par des tirants (28), être détachés de l'arrimage avec les éléments (5) d'arrimage de siège d'enfant fixes du véhicule, lesquels sont reliés entre eux par une traverse (29) qu'attaque une poignée (30) de traction.

2. Cadre de fixation suivant la revendication 1, **caractérisé en ce que** la poignée (30) de traction à un indicateur (31) d'état qui reproduit l'état détaché ou l'état encliqueté des éléments (24) d'arrimage en indiquant la position de la poignée (30) de traction par rapport au cadre de fixation.

3. Cadre de fixation suivant la revendication 1 ou 2 **caractérisé en ce que** les tirants (28) s'étendent dans les longerons et les traverses (29) dans un support (32) transversal arrière du tronçon (23) de fixation du cadre de fixation, la poignée (30) de traction dépassant du support (32) transversal.

4. Cadre de fixation suivant l'une des revendications 1 à 3, **caractérisé en ce que**, pour le cadre de fixation de sièges d'enfant, qui sont montés dans le sens opposé au sens de marche, le tronçon (23) de fixation comporte une branche (23a) de fixation sensiblement horizontale à l'état monté et un tronçon (23b) d'arrimage incliné vers le bas et vers l'arrière, lesquels sont entretoisés de préférence par une tôle (26) d'appui, la branche (23a) de fixation étant reliée, par une articulation (25) pouvant être immobilisée pour l'appui sur le dossier (7) du siège du véhicule, à un étrier (11) arrière d'appui, coudé de préférence vers le haut.

5. Dispositif de retenue d'enfant, comprenant un siège d'enfant pour des véhicules automobiles qui sont munis d'éléments d'arrimage de sièges d'enfant, qui sont propres au véhicule, qui sont associés respectivement à un siège de véhicule et qui sont reliés rigidement à la carrosserie du véhicule et/ou au siège du véhicule, le siège (1) d'enfant étant arrimé de manière amovible à un cadre (3, 13) de fixation suivant l'une des revendications 1 à 4 enjambant la surface (2) d'assise d'un siège de véhicule, dans lequel dans le siège d'enfant est incorporé un dispositif d'arrimage qui s'arrime de manière amovible sur le cadre (3, 13) de fixation, qui a respectivement au moins un élément (10, 17) de blocage mobile d'une position de libération à une production de blocage, qui peut être utilisé, dans la position de libération, dans les éléments (12, 18) d'arrimage rigides mis sur le cadre (3, 13) de fixation et qui peut venir dans la position de blocage pour le verrouillage rigide du siège d'enfant par le cadre (3, 13) de fixation dans les éléments (12) rigides de verrouillage du cadre (3, 13) de fixation, **caractérisé en ce que** le dispositif d'arrimage a, dans la zone proche de la paroi arrière du siège d'enfant, un arbre (10) de blocage parallèle à cette paroi et horizontal à l'état monté, qui est pourvu, sur ses deux tronçons d'extrémité latéraux et, de préférence, sur toute la longueur, de méplats (9) diamétraux parallèles à son axe longitudinal, l'arbre (10) de blocage pouvant tourner autour de son axe longitudinal d'une position de libération ayant des méplats (9) disposés sensiblement verticalement à une position de blocage ayant des méplats (9) disposés sensiblement horizontalement et **en ce que** sur les tronçons longitudinaux latéraux du cadre de fixation sont mis deux éléments (10) rigides latéraux de verrouillage, qui se font face et qui ont respectivement une fente (14) d'introduction verticale prévue pour un tronçon d'extrémité de l'arbre (10) de blocage, fente qui se termine en bas en un épanouissement (15) en contredépouille et constitué de manière cylindrique, dans lequel le tronçon d'extrémité de l'arbre (10) de blocage peut être tourné pour passer de sa position de libération à sa position de blocage.

6. Dispositif de retenue d'enfant suivant la revendication 5, **caractérisé en ce que** les éléments (12) latéraux de verrouillage du cadre (3, 13) de fixation ont des fentes (14) d'introduction cunéiformes et se rétrécissant vers le bas et l'arbre (10) de blocage à des tenons (27) de réglage, qui font tourner l'arbre (10) de blocage en l'amenant dans sa position de libération lors que l'on met le siège d'enfant sur le cadre de fixation en mettant les tenons (27) de réglage de l'arbre (10) de blocage sur la surface des fentes (14) d'introduction des éléments (12) de verrouillage du cadre (3, 13) de fixation.

7. Dispositif de retenue d'enfant suivant la revendication 5 ou 6, **caractérisé en ce que** le dispositif d'arrimage a, dans la zone proche du bord avant du siège d'enfant, une broche (17) de blocage, qui est disposée au milieu, qui peut coulisser dans la direction longitudinale du véhicule et à laquelle est associée un élément (18) avant rigide de verrouillage, qui est mis sur une traverse (19) avant du cadre (3, 13) de fixation, et un trou (20) s'étendant dans la direction longitudinale du véhicule, trou dans lequel la broche (17) de blocage peut être introduite dans la direction longitudinale pour le verrouillage rigide du siège (1) d'enfant par le cadre (3, 13) de fixation.

8. Dispositif de retenue d'enfant suivant l'une des revendications 5 à 7, **caractérisé en ce que** le dispositif d'arrimage a un dispositif (22) d'actionnement de l'élément ou des éléments (10, 17) de blocage par lequel, lorsque le siège d'enfant est mis complètement sur le cadre (3, 13) de fixation, tous les éléments (10, 17) de blocage peuvent venir dans leur position respective de blocage.

9. Dispositif de retenue d'enfant suivant les revendications 5, 7 et 8 et, le cas échéant, supplémentairement aussi la revendication 6, **caractérisé en ce que** le dispositif d'actionnement prévoit une, de préférence deux poignées (22) de rotation qui, pour faire tourner l'arbre (10) de blocage, est mise ou sont mises sur un tronçon, de préférence sur deux tronçons latéraux de l'arbre de blocage, ainsi qu'un bras (21) articulé rigide, qui s'étend sensiblement dans la direction longitudinale du véhicule, qui couple de manière amovible l'arbre (10) de blocage à la broche (17) de blocage et qui transforme les mouvements de rotation de l'arbre (10) de blocage en un mouvement de coulissement de la broche (17) de blocage.

10. Dispositif de retenue d'enfant suivant la revendication 8 ou 9, **caractérisé en ce que** le dispositif d'actionnement comporte un organe de précontrainte constitué par exemple sous la forme d'un poids ou d'un ressort et mettant sous précontrainte les éléments (10, 17) de blocage automatiquement dans les positions de blocage, organe par lequel les éléments (10, 17) de blocage, déplacés dans leur position de libération par l'opération de pose du siège (1) d'enfant, sont ramenés dans leur position de blocage lorsque le siège (1) d'enfant est mis complètement sur le cadre (3, 13) de fixation.

11. Dispositif de retenue d'enfant suivant l'une des revendications 6 à 10 et l'une des revendications 2 à 3, **caractérisé en ce que** le corps (33) du siège d'enfant comporte, sur son côté tourné vers le cadre de fixation, des cavités de réception du cadre de fixation et de réception de la poignée (30) de traction lorsque les éléments (24) d'arrimage sont à l'état verrouillés.
